Europäisches Patentamt

European Patent Office

Office européen des brevets

(11) Publication number: **0 250 941**
**B1**

# EUROPEAN PATENT SPECIFICATION

(45) Date of publication of the patent specification:
31.01.90

(51) Int. Cl.⁴: **F16B 5/06**

(21) Application number: 87108256.6

(22) Date of filing: 06.06.87

(54) **Dual position fastener.**

(30) Priority: 19.06.86  IT 2084086

(43) Date of publication of application:
07.01.88 Bulletin 88/1

(45) Publication of the grant of the patent:
31.01.90 Bulletin 90/5

(84) Designated Contracting States:
DE FR GB

(56) References cited:
DE-A- 3 008 990
DE-B- 1 625 393
DE-B- 2 718 170
DE-U- 7 721 719
FR-A- 2 183 470
US-A- 3 202 038
US-A- 4 176 428

DE - A - SCH 7624 XII/47c, 29-01-1953 (SCHWEITZER)

(73) Proprietor: BULL HN INFORMATION SYSTEMS ITALIA
S.p.A., Via Martiri d'Italia 3, I-10014 Caluso (Torino)(IT)

(72) Inventor: De Andrea, Renato, Via Maniago 21,
I-20134 Milano(IT)

## Description

The present invention relates to a dual-position fastener for fixing, in removable mode, a closing panel to a cabinet enclosing electronic circuits.

It is known that most of the electronic equipments, especially computers, consists in electronic circuits implemented on printed circuit boards and housed in cabinets for enclosure and protection purposes.

In order to allow access to the electronic circuits, these cabinets are provided with at least one removable panel that is fixed to the cabinet by means of fasteners.

This panel must be removable firstly to allow the insertion of the electronic circuits in the cabinet then to enable their partial removal and replacement in case of faults, and lastly, to allow the access to some prefixed points on the circuits and their connection to external maintenance, testing measurement, and fault detection and identification equipment.

It is also known that several electronic equipments, particularly electronic computers, are "fault tolerant" that is, they can operate even in the presence of certain malfunctions, although with reduced performances.

Very often, to identify the cause of the errors and the malfunctions, time consuming test procedures must be carried out with the aid of external diagnostic tools. However these tests can be performed at the user's installation site and concurrently with normal system operation.

Up to now, in order to carry out these test procedures, the removal of the closing panel has proved necessary so as to enable the connection of the diagnostic instruments, which implies using the electronic equipment in anomalous and hazardous conditions. These anomalous conditions arise because the absence of this panel alters, and often substantially, the flow of cooling air that is circulated in the equipment by means of fans.

The hazardous conditions arise because the electric and electronic circuits remain unprotected and therefore accesible not only to the maintainance engineer but also to any person who might be present in the installation area.

This is all the more serious since, in order to cut down on costs, many testing procedures can be run in a "unattended mode", that is without requiring the maintainance engineer's attendance/supervision.

The result of this is a lack of surveillance which could lead to further malfunctions of the equipment or, even worse, to possible injury to the users.

The removable dual position fastener object of the present invention overcomes these drawbacks allowing a closing panel to be fixed both in a normal fully closed position and in a partially open position. In the latter case the panel is fixed apart from the cabinet so as to allow sufficient space (space that could be in the order of a centimeter) for the passage of the cables that connect the external equipment and, at the same time, it guarantees a protection for the electronic circuits thus avoiding the accidental contact by the user. Furthermore the use of this fastener will ensure that the cooling air flows will be minimally affected.

According to the invention, these advantages are achieved by means of a two position fastener.

US-A 4 176 428 discloses a fastener suitable for fastening a decorative panel to a metal panel, particularly a lining panel on the inner side of an automobile door.

The fastener comprises a cylindrical pin having fastening means for fixing to a decorative panel at one end and a bulbous engaging portion at the other end.

A resilient boss, having an axial opening for inserting the cylindrical pin and an annular groove for its fastening to a metal sheet, has the axial opening shaped to form two spherical cavities along the axial opening, so that the resilient boss may first be mounted on the pin, a first of the two cavities then receiving the bulbous engaging portion of the pin, and subsequently may be fitted by pressure in an opening of the metal sheet.

By this pressure the edges of the opening fit in the annular groove and locks the resilient boss. At the same time the bulbous engaging portion of the pin is pushed and fit in the second spherical cavity provided in the resilient boss, and is steadily retained therein.

In a certain sense, this fastener may be considered a two position fastener; however it is not suitable for steadily retaining a panel in one of two selectable position, the scope of the two mounting positions of the pin in the boss being only to provide an easier assembling of the decorative panel on a metal panel.

This limitation is overcome by the two positions fastener of the invention.

This fastener consists of two parts: one part is made of rubber with the shape of a through hole boss and is fixed to a wing of the cabinet; the other part is rigid and has the shape of a cylindrical pin with two toroidal expansions appropriately spaced along the axis of the pin.

This second part is fixed to the closing panel.

The cylindrical pin is designed for insertion in the through hole boss where, owing to the toroidal expansions, it may take one of two fixed positions, thus ensuring two stable fastening positions of the panel in relation to the cabinet.

These features will became more apparent from the following description of a preferred embodiment of the invention and from the attached drawings where:

Fig. 1 shows in section and side view respectively the two components that make up the fastening device that is the object of the present invention, that is, the boss and the pin.

Fig. 2 shows in section the two components of the fastening device of the invention mounted on two separate elements to be held together in the first fastening position.

Fig. 3 shows in section the two components of the fastening device of the invention as shown in fig. 2 but in the second fastening position.

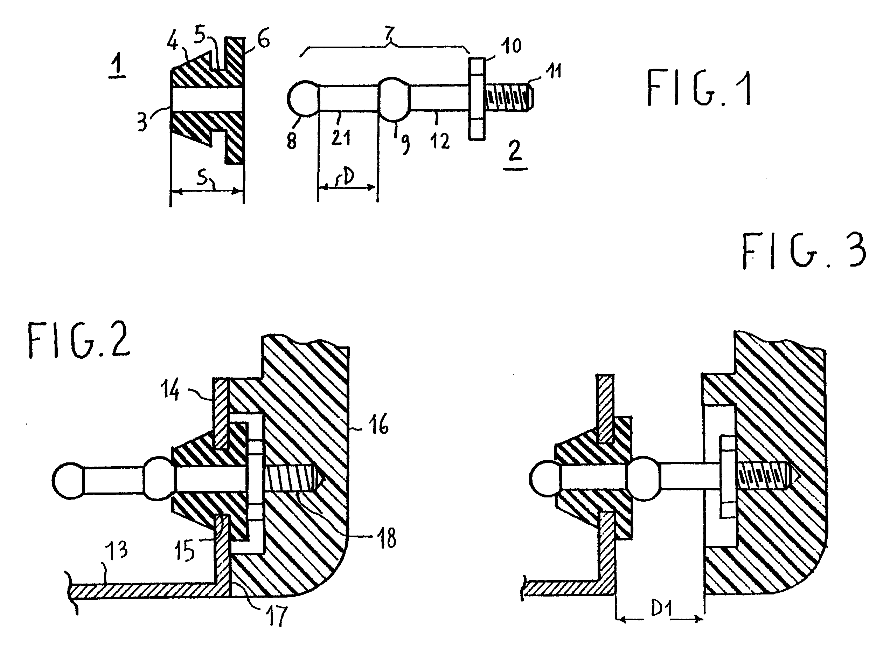

Referring to fig. 1 the fastening device consists in a boss 1 made of elastomer, such as natural or synthetic rubber, and a rigid cylindrical pin 2, preferably made of metal.

Boss 1 forms an elastic body with a cylindrical cavity therethrough. This elastic body comprises, in the order, a tapered end portion, an intermediate cylindrical portion having a diameter lesser than the one of the tapered portion and a ledger portion of greater diameter.

The thickness of these three portions, in the axial direction of the cylindrical cavity is indicated by an "S" and can be in the order of 1 cm.

An annular groove having an appropriate width is present between the end portion 4 and the bearing portion 6.

The fastening pin 2 consists in a cylindrical body 7 that is terminated at one end by a first toroidal expansion 8 and is interrupted by a second toroidal expansion while at the other end is terminated by a hexagonal nut 10 beyond which a threaded screw 11 protrudes.

The two toroidal expansions 8 and 9 are separated by a cylindrical portion 21 of the pin, at a distance from each other which is indicated by "D".

A second cylindrical portion 12 of the pin having equal diameter and it separates the toroidal expansion 9 from nut 10.

Distance "D" is conveniently slightly less than boss thickness, whereas the diameter of the cylindrical portions 21 and 12 is the same as the diameter of the boss cylindrical cavity 3.

Due to the boss resiliency, the pin can be inserted, using a reasonable effort, into cavity 3 so that the boss is located in correspondence with either the cylindrical portion 21 or 12.

For each of the two positions, the pair of toroidal expansions 8 or 9 or the toroidal expansion 9 and nut 10 constitutes ledges that ensure a stable position which can be modified with a reasonable effort.

Fig. 2 is a section top view of the boss and the pin mounted on a cabinet and on the related closing panel respectively.

The cabinet, which is only partially shown, has a wall 13, for instance a side wall, that is bent at a right angle so as to form a wing 14 which extends in correspondence with the opening (either rear or front) of the cabinet which is to be closed by the panel.

Wing 14 has a circular opening in which boss is forced so that wing 14 in its portion 15 that surrounds the circular opening, fits the annular groove of boss 1.

In this way the boss is firmly fixed to cabinet wing 14.

Cabinet wing 14 constitutes a ledge plane on which the closing panel 16 will be fixed.

Panel 16 may consist of a conveniently shaped metal plate or, as partially shown in the figure, of a plastic plate or, as partially shown in the figure, of a plastic plate reinforced with fiberglass and provided with a ledge plane designed in such a way as to match with cabinet wing 14.

In alignment with the axis of the boss 1, the panel has a threaded seat 18, into which the threaded screw 11 of pin 2 is screwed, and a recess whose width is equal to the sum of the thicknesses of the pin nut 10, and the ledger portion 6 of the boss.

In this way the closing panel can be positioned, as shown in fig. 2, in close contact with wing 14, thus ensuring that the cabinet is fully closed.

Even if Fig. 2 only shows one fixing device, it is clear that the panel will be serured by means of a plurality of the said devices which will be appropriately located.

Fig. 3 shows, in section top view, the same structure as shown in Fig. 2 where, however, panel 6 is fixed to the cabinet in a spaced-apart position.

To this end it is sufficient to partially extract the pin from the boss so that boss 1 is located in correspondence with the cylindrical portion 21 of the pin.

The relative position of the boss and pin and therefore of the cabinet and panel, is steadily fixed by the pin toroidal expansion which prevents the panel from either touching the cabinet or being removed from the cabinet without a resonable effort.

The closing panel, when in this position, ensures the protection of the electric/electronic circuits contained in the cabinet, prevents the risk of accidental contact with the circuits by the users, ensures a reasonable closure of the cabinet so that the cooling flows will not be affected and, at the same time, it allows the internal electric circuits to be accessed and connected to the exterior by means of cable that can be easily inserted in the free space between the cabinet and the panel whose distance is equal to D1.

It is clear that the form of the cabinet and the panel described and shown here is only an example and that the fastening device, object of the present invention, may also be applied to cabinets and panels having different shapes.

Wings 4 of the cabinet instead of being formed by folding the cabinet sides, might be shaped by bending the cover and the bottom of the cabinet or in any other suitable way.

Furthermore these wings can be placed in recess with respect to the edges of the cabinet so that these edges form a frame into which the closing panel may be inserted.

Thus the frame may be provided with indentations, normally closed by the panel, through which cables may be passed when the panel is mounted in a spaced-apart position in relation to the cabinet.

## Claims

Dual position fastener for fixing together in removable way two elements, such as a cabinet for electronic equipment and a closing panel comprising a resilient boss (1) and a cylindrical pin (2), said boss (1) having an axial opening (3) for inserting said cylindrical pin and an annular groove (5) for its fastening to a first one of said elements, said pin (2) having a fastening tang (11) for fixing said pin to the second of said elements and a ledge portion (10), the diameter of said pin being substantially equal to the diameter of said axial opening, characterized by that said pin has a first terminal toroidal expansion (8) and a second intermediate toroidal expansion (9), the distance (D) between said first and second toroidal expansion and between said second expansion (9) and said ledge portion (10) being slightly less than the axial thickness (S) of said boss in the direction of said axial opening.

## Patentansprüche

Mittel zum abnehmbaren Befestigen zweier Elemente in zwei Positionen, z.B. einer Abdeckung an einem Schrank für elektrische Ausrüstung, mit einem elastischen Zapfen (1) und einem zylindrischen Stift (2), wobei der Zapfen eine axiale Öffnung (3) zum Einsetzen des Stifts sowie eine Ringnut (5) zu seiner Befestigung an einem ersten (14) der beiden Elemente (14, 16) aufweist;
der Stift (2) einen Haltedorn (11) zum Befestigen am zweiten (16) der beiden Elemente sowie einen Kragen (10) aufweist; und der Durchmesser des Stifts etwa dem Durchmesser der Öffnung entspricht;
dadurch gekennzeichnet, daß der Stift eine erste toroidförmige Verdickung (8) am einen Ende und eine zweite toroidförmige Verdickung (9) an einem Zwischenteil aufweist und daß der Abstand (D) zwischen den beiden toroidförmigen Verdickungen sowie der Abstand zwischen der zweiten Verdickung (9) und dem Kragen (10) jeweils etwas geringer ist als die axiale Länge (S) des Zapfens in Richtung der axialen Öffnung.

## Revendications

Un dispositif de fixation pour deux positions de fixation pour fixer d'une seule pièce d'une façon amovible deux éléments, tel qu'un boîtier pour un équipement électronique et un panneau de fermeture comprenant un bossage élastique (1) et une broche cylindrique (2), ledit bossage (1) présentant une ouverture axiale (3) pour insérer ladite broche cylindrique et une rainure annulaire (5) pour permettre sa fixation à un premier de ces deux éléments, ladite broche (2) présentant une poignée de fixation (11) pour fixer ladite broche au second desdits éléments et une portion de revêtement (10), le diamètre de ladite broche étant sensiblement égal au diamètre de ladite ouverture axiale, caractérisé en ce que ladite broche présente une première expansion à terminale (8) et une seconde expansion à intermédiaire (9), la distance (D) entre lesdites première et seconde expansions toroïdales et entre ladite seconde expansion (9) et ladite portion de moulure (10) étant légèrement inférieure à celle de l'épaisseur axiale (S) dudit bossage dans la direction de ladite ouverture axiale.

FIG.1

FIG.2

FIG.3